# EUROPÄISCHE PATENTANMELDUNG

(11) **EP 1 566 896 A1**
(43) Veröffentlichungstag der Anmeldung: **24.08.2005**
(21) Anmeldenummer: 04003631.1
(22) Anmeldetag: 18.02.2004
(51) Int. Cl.: H04B 7/06

(54) **Verfahren zur Kommunikation über eine Mehrzahl von netzseitigen Sendeantennen**

(71) Anmelder: SIEMENS AKTIENGESELLSCHAFT, 80333 München (DE)
(72) Erfinder: Li, Hui, Dr., 80937 München (DE)

(57) **Zusammenfassung**

Die Erfindung betrifft ein Verfahren zur Kommunikation in einem Funkkommunikationssystem, umfassend netzseitige Einrichtungen (APS1, APS2, ANT-A, ANT-B, ANT-C, ANT-E, ANT-E) und Funkstationen (MS). Von netzseitigen Antennen (ANT-A, ANT-B, ANT-C, ANT-E, ANT-E) wird eine Nachricht einer Funkstation (MS) empfangen. Im Anschluss wird eine Nutzdatennachricht über eine Mehrzahl von netzseitigen Antennen (ANT-A, ANT-B, ANT-C, ANT-E, ANT-E) zu der Funkstation (MS) übertragen. Erfindungsgemäß hängt die Zugehörigkeit von netzseitigen Antennen (ANT-A, ANT-B, ANT-C, ANT-E, ANT-E) zu der Mehrzahl von netzseitigen Antennen (ANT-A, ANT-B, ANT-C, ANT-E, ANT-E) davon ab, welche netzseitigen Antennen (ANT-A, ANT-B, ANT-C, ANT-E, ANT-E) die Nachricht der Funkstation (MS) empfangen haben. Weiterhin betrifft die Erfindung eine netzseitige Einrichtung (APS1) und ein Computerprogrammprodukt zur Durchführung des Verfahrens.

## Beschreibung

Verfahren zur Kommunikation über eine Mehrzahl von netzseitigen Sendeantennen

Die Erfindung betrifft ein Verfahren zur Kommunikation in einem Funkkommunikationssystem nach dem Oberbegriff des Anspruchs 1. Weiterhin betrifft die Erfindung eine netzseitige Einrichtung und ein Computerprogrammprodukt zur Durchführung des Verfahrens.

In Funkkommunikationssystemen werden Nachrichten, wie beispielsweise Signalisierungsnachrichten oder Nutzdatennachrichten mit Sprachinformationen, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen und netzseitige Funkeinrichtungen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit netzseitigen Einrichtungen wie z.B. Basisstationen und Einrichtungen zur Kontrolle und Steuerung der Basisstationen ausgebildet.

Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von bis zu einigen hundert Metern im Vergleich zu üblichen Mobilfunkzellen klein. Beispiele verschiedener Standards für WLANs sind HiperLAN, DECT, IEEE 802.11, Bluetooth und WATM.

Während in vielen Funkkommunikationssystemen pro Zelle eine in der Regel zentral angeordnete netzseitige Antenne zur Versendung von Nachrichten an Funkstationen eingesetzt wird, ist es auch möglich, pro Funkzelle eine Mehrzahl von netzseitigen Antennen zu verwenden. Nachrichten für Funkstationen können dann gleichzeitig über mehrere netzseitige Antennen abgestrahlt werden. Wird eine Nachricht an eine Funkstation über eine Mehrzahl von netzseitigen Antennen ausgestrahlt, so entsteht hierdurch u.U. störende Interferenz für die Nachrichtenübertragung an andere sich in der Nähe befindende Funkstationen. Daher ist es vorteilhaft, Nachrichten für eine Funkstation nur über eine begrenzte Anzahl von netzseitigen Antennen auszustrahlen.

Der Erfindung liegt die Aufgabe zugrunde, ein effizientes Verfahren zur Kommunikation vorzustellen, bei dem eine Nachricht über eine Mehrzahl von netzseitigen Antennen an eine Funkstation gesendet wird. Weiterhin sollen eine netzseitige Einrichtung und ein Computerprogrammprodukt für eine netzseitige Einrichtung zur Durchführung des Verfahrens vorgeschlagen werden.

Diese Aufgabe wird hinsichtlich des Verfahrens durch ein Verfahren mit den Merkmalen des Anspruchs 1 gelöst. Die Aufgabe hinsichtlich der netzseitigen Einrichtung und des Computerprogrammproduktes wird durch eine netzseitige Einrichtung und ein Computerprogrammprodukt mit den Merkmalen von nebengeordneten Ansprüchen gelöst.

Vorteilhafte Ausgestaltungen und Weiterbildungen sind Gegenstand von Unteransprüchen.

Das Verfahren wird in einem Funkkommunikationssystem, welches netzseitige Einrichtungen und Funkstationen umfasst, angewandt. Eine Nachricht einer Funkstation wird von netzseitigen Antennen empfangen. Im Anschluss daran wird eine Nutzdatennachricht über eine Mehrzahl von netzseitigen Antennen zu der Funkstation übertragen. Erfindungsgemäß hängt die Zugehörigkeit von netzseitigen Antennen zu der Mehrzahl von netzseitigen Antennen davon ab, welche netzseitigen Antennen die Nachricht der Funkstation empfangen haben.

Bei den netzseitigen Einrichtungen des Funkkommunikationssystems kann es sich z.B. um netzseitige Antennen, Einrichtungen zur Steuerung der Antennen und Einrichtungen zur Erstellung von zu sendenden und Verarbeitung von empfangenen Nachrichten handeln. Die Funkstationen können z.B. verschiedenartige, insbesondere mobile, Teilnehmerstationen umfassen. Mit Vorzug kann es sich bei dem Funkkommunikationssystem um ein zellulares System handeln, wobei jede Funkzelle eine oder mehrere netzseitige Antennen aufweist. Bei mehreren netzseitigen Antennen pro Funkzelle sind alle netzseitigen Antennen der jeweiligen Funkzelle mit einer netzseitigen Einrichtung verbunden, welche auszustrahlende Nachrichten an die netzseitigen Antennen übermittelt. Netzseitige Antennen verschiedener Funkzellen erhaltene die von ihnen auszustrahlenden Nachrichten von verschiedenen netzseitigen Einrichtungen.

Die Nachricht der Funkstation, aufgrund deren Empfang hin netzseitig entschieden werden kann, über welche netzseitigen Antennen eine zukünftig zu versendende Nutzdatennachricht an die Funkstation zu senden ist, kann insbesondere eine Identifikationsinformation der Funkstation umfassen. Nach der Auswertung, über welche netzseitigen Antennen die Nachricht der Funkstation empfangen wurde, wird eine Nutzdatennachricht an die Funkstation über eine Mehrzahl von Antennen gesendet. Die Zusammensetzung der Mehrzahl an netzseitigen Antennen, d.h. die Frage, aus welchen netzseitigen Antennen die Mehrzahl der netzseitigen Antennen besteht, kann so festgelegt werden, dass alle diejenigen netzseitigen Antennen, welche die Nachricht der Funkstation empfangen haben bzw. mit einem Mindestempfangspegel empfangen haben, die Nutzdatennachricht an die Funkstation versenden. Es können aber neben dem Kriterium, welche netzseitigen Antennen die Nachricht der Funkstation empfangen haben, auch weitere Kriterien zur Festlegung der Mehrzahl der netzseitigen Antennen verwendet werden, wie z.B. eine Mindest- oder Höchstanzahl an zu verwendenden netzseitigen Antennen, eine Auslastung von netzseitigen Antennen und/oder eine geographische oder zellmäßige Verteilung bzw. Anordnung der netzseitigen Antennen.

Es ist vorteilhaft, wenn sich die netzseitigen Antennen der Mehrzahl an netzseitigen Antennen an unterschiedlichen Positionen innerhalb des Funkkommunikationssystems befinden, d.h. getrennt sind durch Distanzen, welche groß gegenüber der zur Funkübertragung verwendeten Wellenlänge sind. In einem zellularen System z.B. können die netzseitigen Antennen einer Zelle in etwa regelmäßig über die Zelle verteilt sind. Mit Vorzug erfolgt die Versendung der Nutzdatennachricht an die Funkstation über die Mehrzahl von netzseitigen Antennen zeitlich synchron oder zumindest annähernd synchron oder mit netzseitig festgelegten Zeitdifferenzen zwischen der Versendung der Nutzdatennachricht über die einzelnen netzseitigen Antennen.

In Weiterbildung der Erfindung handelt es sich bei der netzseitig empfangenen Nachricht um eine Signalisierungsnachricht, welche von der Funkstation in regelmäßigen Zeitabständen gesendet wird. Der Inhalt der Nachricht kann hierbei bei jeder Versendung der gleiche sein, er kann sich aber auch von Versendung zu Versendung teilweise oder ganz unterscheiden. Ein Versendung in regelmäßigen Zeitabständen bedeutet, dass die Funkstation zur Versendung der Nachricht nicht unbedingt von einer netzseitigen Einrichtung aufgefordert werden muss. Die Signalisierungsnachricht kann insbesondere ausschließlich zum Zweck der Bestimmung der netzseitigen Antennen, über welche geeigneterweise die Versendung von Nachrichten an die Funkstation erfolgt, von der Funkstation versendet werden. Die Zeitabstände zwischen den einzelnen Versendungen der Nachricht können der Funkstation von einer netzseitigen Einrichtung mitgeteilt werden, wobei eine Anpassung der Zeitabstände an verschiedene Umstände, wie z.B. die Art des von der Funkstation in Abwärtsrichtung in Anspruch genommenen Dienstes oder die aktuelle Auslastung von Funkressourcen, möglich ist.

Einer anderen Weiterbildung der Erfindung gemäß wird eine erste Nachricht über mindestens eine netzseitige Antenne zu der Funkstation übertragen, und bei der netzseitig empfangenen Nachricht handelt es sich um eine auf den Empfang der ersten Nachricht hin gesendeten Antwortnachricht. Vorteilhaft ist es, wenn die erste Nachricht über eine Gruppe von netzseitigen Antennen gesendet wird, wobei diese Gruppe die Mehrzahl der netzseitigen Antennen, über welche später die Nutzdatennachricht an die Funkstation gesendet wird, umfasst. Die erste Nachricht kann insbesondere eine Identifikationsinformation der Funkstation umfassen.

In Ausgestaltung der Erfindung handelt es sich bei der ersten Nachricht um eine Signalisierungsnachricht, welche die Funkstation auffordert, die Antwortnachricht zu senden. In diesem Fall wird die Funkstation explizit aufgefordert, die Nachricht zu senden, welche dann netzseitig zur Auswahl von geeigneten netzseitigen Antennen zum Versenden von Nachrichten an die Funkstation verwendet werden kann. Insbesondere ist es möglich, dass die Signalisierungsnachricht ausschließlich zu dem Zweck der Anforderung der Antwortnachricht versendet wird.

Mit Vorzug wird die erste Nachricht in regelmäßigen ersten Zeitabständen gesendet. Es ist auch möglich, dass die erste Nachricht vor der Versendung der Nutzdatennachricht an die Funkstation gesendet wird, unter der Bedingung, dass seit der letzten Versendung einer Nachricht des Typs der ersten Nachricht ein bestimmter zweiter Zeitabstand verstrichen ist. Letztgenannte Ausgestaltung ermöglicht es, dann, wenn netzseitig eine Nutzdatennachricht für die Funkstation vorliegt, zu prüfen, wann das letzte Mal bestimmt wurde, welche netzseitigen Antennen zur Versendung zu verwenden sind. Ist diese letzte Bestimmung länger als der zweite Zeitabstand her, so kann eine erste Nachricht versendet werden, um vor der Versendung der Nutzdatennachricht die geeigneten netzseitigen Antennen festzulegen. Auch die Kombination der regelmäßigen Versendung der ersten Nachricht mit einer Versendung der ersten Nachricht aus konkretem Anlass, d.h. mit der Überprüfung, ob die erste Nachricht vor einer Nutzdatennachrichtversendung gesendet werden soll, ist möglich.

Einer vorteilhaften Ausgestaltung der Erfindung gemäß handelt es sich bei der ersten Nachricht um eine Nachricht mit Nutzdaten und bei der Antwortnachricht um eine Bestätigung des Empfangs der Nutzdaten durch die Funkstation. Somit kann eine in der Regel ohnehin stattfindende Empfangsbestätigung (ACK, Acknowledgement) der Funkstation netzseitig u.a. dazu verwendet werden, geeignete netzseitige Antennen zur Versendung von weiteren Nachrichten an die Funkstation zu bestimmen. Die Verwendung von Bestätigungsnachrichten der Funkstation zur Bestimmung von geeigneten Antennen für die Datenversendung in Abwärtsrichtung ist insbesondere dann vorteilhaft, wenn die Funkstation einen Dienst in Anspruch nimmt, bei welchem ihr eine Vielzahl von Nachrichten in Abwärtsrichtung gesendet werden, oder auch bei welchem Nutzdaten ausschließlich in Abwärtsrichtung übertragen werden, so z.B. für den Fall, dass die Funkstation Daten aus dem Internet herunterlädt.

Es ist möglich, dass die erste Nachricht über alle netzseitigen Antennen einer oder mehrerer Funkzellen des Funkkommunikationssystems oder über alle netzseitigen Antennen des Funkkommunikationssystems gesendet wird. Die Entscheidung darüber, über welche netzseitigen Antennen die erste Nachricht an die Funkstation gesendet wird, kann davon abhängig gemacht werden, wie genau die aktuelle Position der Funkstation im Funkkommunikationssystem bekannt ist.

Weiterhin ist es möglich, dass die Mehrzahl von netzseitigen Antennen derselben Funkzelle des Funkkommunikationssystems angehören, oder dass zumindest manche der netzseitigen Antennen der Mehrzahl von netzseitigen Antennen verschiedenen Funkzellen des Funkkommunikationssystems angehören. Hierdurch können Handover-Vorgänge zwischen verschiedenen Funkzellen vereinfacht werden.

In einer bevorzugten Ausführungsform der Erfindung umfasst die erste Nachricht Identifikationsinformationen der jeweiligen Funkzelle, über deren netzseitige Antenne oder Antennen sie gesendet wird, und die Antwortnachricht umfasst Identifikationsinformationen derjenigen Funkzelle oder Funkzellen, von deren netzseitigen Antenne oder Antennen die Funkstation die erste Nachricht empfangen hat. Wird die erste Nachricht über netzseitige Antennen mehrerer Funkzellen ausgestrahlt, so trägt die erste Nachricht in diesen Funkzellen jeweils eine unterschiedliche zellspezifische Identifikationsinformation. Empfängt die Funkstation die erste Nachricht lediglich über netzseitige Antennen einer einzigen Funkzelle, so beinhaltet die Antwortnachricht Identifikationsinformation nur von dieser Funkzelle. Empfängt die Funkstation die erste Nachricht hingegen über netzseitige Antennen einer ersten und einer zweiten Funkzelle, so beinhaltet die Antwortnachricht Identifikationsinformation von beiden Funkzellen.

### Die erfindungsgemäße netzseitige Einrichtung weist auf:

Mittel zum Empfangen über netzseitige Antennen einer Nachricht einer Funkstation oder zum Empfangen von Informationen über den Empfang über netzseitige Antennen einer Nachricht einer Funkstation,
Mittel zum Anordnen, dass eine Nutzdatennachricht über eine Mehrzahl von netzseitigen Antennen an die Funkstation gesendet wird, und
Mittel zum Bestimmen der Zugehörigkeit von netzseitigen Antennen zu der Mehrzahl von netzseitigen Antennen in Abhängigkeit davon, welche netzseitigen Antennen die Nachricht der Funkstation empfangen haben.

Die in der erfindungsgemäßen netzseitigen Einrichtung vorhandenen Mittel können insbesondere durch ein Computerprogrammprodukt realisiert werden. Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Die erfindungsgemäße netzseitige Einrichtung und auch das erfindungsgemäße Computerprogrammprodukt eignen sich insbesondere zur Durchführung des erfindungsgemäßen Verfahrens, wobei dies auch auf die Ausgestaltungen und Weiterbildungen zutrifft. Hierzu können sie weitere geeignete Mittel aufweisen. Die erfindungsgemäße netzseitige Einrichtung kann auch durch eine Mehrzahl an miteinander verbundenen netzseitigen Einrichtungen realisiert werden, welche die jeweiligen Mittel aufweisen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: ein erstes Ablaufdiagramm eines erfindungsgemäßen Verfahrens,
- Figur 3:: ein zweites Ablaufdiagramm eines erfindungsgemäßen Verfahrens,
- Figur 4:: schematisch den Aufbau einer erfindungsgemäßen netzseitigen Steuereinrichtung.

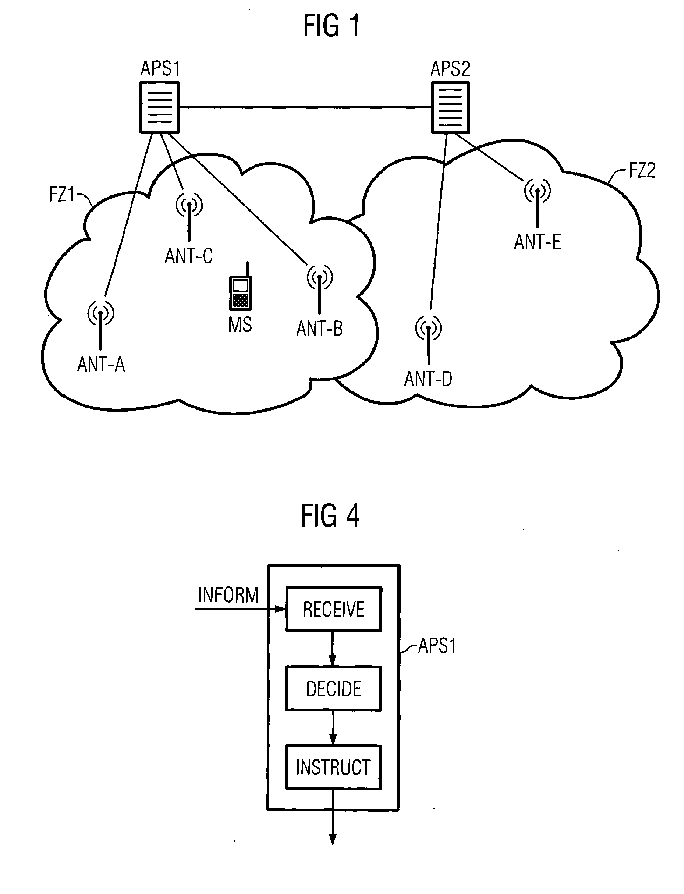

In Figur 1 sind zwei durch Wolken veranschaulichte Funkzellen FZ1 und FZ2 eines Funkkommunikationssystems dargestellt. In der ersten Funkzelle FZ1 befinden sich verteilt die drei netzseitigen Antennen ANT-A, ANT-B und ANT-C, welche mit der ersten Steuereinrichtung APS1 (APS: Antenna Processing Station) verbunden sind. Während die Antennen ANT-A, ANT-B und ANT-C für den Empfang und die Versendung von Nachrichten von bzw. zu Funkstationen, wie z.B. der Mobilstation MS, zuständig sind, findet jegliche Verarbeitung von Funksignalen in der Steuereinrichtung APS1 statt. Entsprechendes gilt für die zweite Funkzelle FZ2, in welcher die beiden netzseitigen Antennen ANT-D und ANT-E mit der zweiten Steuereinrichtung APS2 verbunden sind. Die beiden Steuereinrichtungen APS1 und APS2 sind, gegebenenfalls über weitere Einrichtungen, miteinander verbunden. Weitere Funkzellen, Infrastruktureinrichtungen und teilnehmerseitige Funkstationen sind der Übersichtlichkeit halber nicht in Figur 1 dargestellt.

Unter einer Funkzelle wird hier der geographische Bereich verstanden, der von denjenigen netzseitigen Antennen versorgt wird, welche mit einer gemeinsamen Steuereinrichtung verbunden sind. Antennen verschiedener Funkzellen sind somit nicht direkt mit der gleichen Steuereinrichtung verbunden. Verschiedene Funkzellen können sich überlappen.

Wird eine Nachricht in Abwärtsrichtung an die Mobilstation MS gesendet, so erfolgt die Versendung gleichzeitig über eine Mehrzahl von netzseitigen Antennen. Die Mobilstation MS kann die Signale der verschiedenen netzseitigen Antennen kombinieren und somit eine Nachricht zuverlässiger dekodieren als bei der Versendung durch eine einzige netzseitige Antenne. Hierbei ist es vorteilhaft, eine Nachricht nur über diejenigen Antennen zu versenden, deren Signale die Mobilstation MS aufgrund ihres aktuellen Aufenthaltsortes empfangen kann. Werden Antennen über dies hinaus eingesetzt, so wird unnötige Interferenz für Nachrichten anderer Teilnehmerstationen erzeugt.

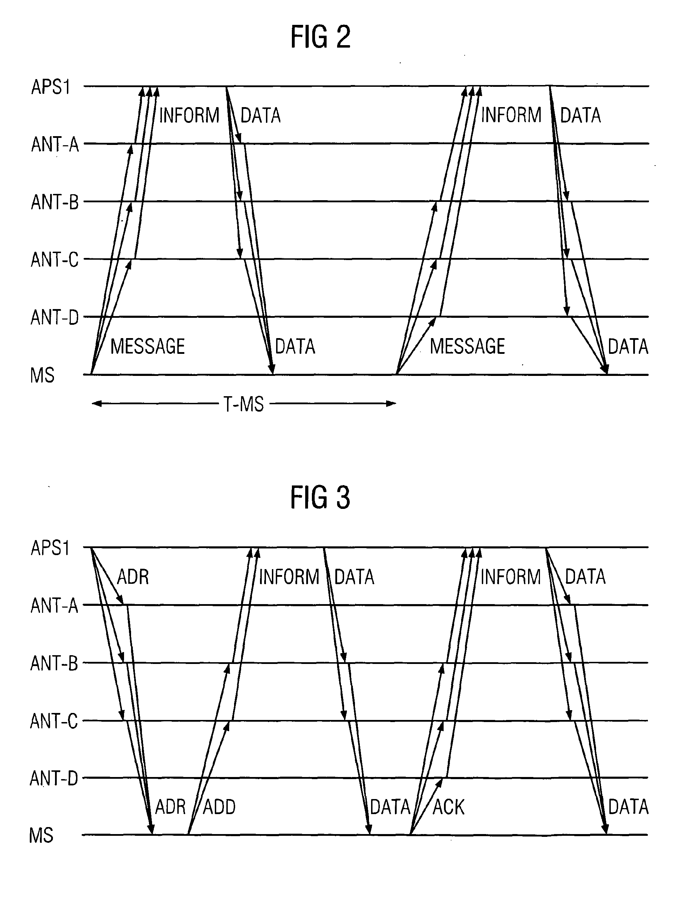

Um zu ermitteln, über welche Antennen eine Nachricht an die Mobilstation MS gesendet werden soll, werden verschiedene Vorgehensweisen vorgeschlagen. Ein Ablaufdiagramm einer ersten Vorgehensweise ist in Figur 2 dargestellt. Zu Beginn sendet die Mobilstation MS per Rundsenderuf eine Nachricht MESSAGE aus, welche ihre Identifikationsinformation enthält. Die Nachricht MESSAGE wird von denjenigen Antennen empfangen, welche sich innerhalb der Funkreichweite der Mobilstation MS befinden. Es wird davon ausgegangen, dass die Funkreichweite der Mobilstation MS und diejenige der netzseitigen Antennen ANT-A, ANT-B, ANT-C, ANT-D und ANT-E in etwa gleich groß ist. In Figur 2 ist der Fall dargestellt, dass die Nachricht MESSAGE von den Antennen ANT-A, ANT-B und ANT-C empfangen wird. Diese Konstellation kann z.B. in etwa der in Figur 1 dargestellten Position der Mobilstation MS entsprechen. Mit den Nachrichten INFORM teilen die drei Antennen ANT-A, ANT-B und ANT-C der Steuereinrichtung APS1 mit, dass sie die Nachricht MESSAGE von der Mobilstation MS empfangen haben, bzw. leiten die drei Antennen ANT-A, ANT-B und ANT-C die Nachricht MESSAGE der Mobilstation MS an die Steuereinrichtung APS1 weiter. Liegt netzseitig eine Nachricht DATA für die Mobilstation MS vor, wird diese von der Steuereinrichtung APS1 an die drei Antennen ANT-A, ANT-B und ANT-C gesendet, welche diese an die Mobilstation MS weiterleiten.

Die Mobilstation MS sendet die Nachricht MESSAGE unaufgefordert in regelmäßigen Zeitabständen T-MS aus. Bis zur nächsten Versendung der Nachricht MESSAGE werden die aufgrund des Empfangs der vorherigen Nachricht MESSAGE ermittelten Antennen ANT-A, ANT-B und ANT-C zur Versendung von Nachrichten an die Mobilstation MS genutzt. Die Länge des Zeitabstandes zwischen den einzelnen Versendungen der Nachrichten MESSAGE wird der Mobilstation MS vom Netz mitgeteilt. Hierbei kann berücksichtigt werden, dass es dann, wenn die Mobilstation MS häufig Nachrichten empfängt, vorteilhaft ist, die Nachricht MESSAGE in kurzen Zeitabständen auszustrahlen. Hierdurch kann vermieden werden, dass allzu oft Nachrichten über Antennen ausgestrahlt werden, welche die Mobilstation MS nicht empfangen kann. Andererseits ist es für den Fall, dass nur selten Nachrichten für die Mobilstation MS vorliegen, günstiger, die Nachricht MESSAGE mit größeren Zeitabständen T-MS auszustrahlen. Hierdurch kann der Signalisierungsoverhead, welcher durch die Versendung der Nachricht MESSAGE erzeugt wird, vermindert werden.

In Figur 2 ist der Fall dargestellt, dass die nächste von der Mobilstation MS gesendete Nachricht MESSAGE von den Antennen ANT-B, ANT-C und ANT-D empfangen wird. Dies würde in Bezug auf die Figur 1 z.B. der Konstellation entsprechen, dass sich die Mobilstation MS nach oben und/oder nach rechts bewegt hat. Die Antennen ANT-B, ANT-C und ANT-D teilen der Steuereinrichtung mit den Nachrichten INFORM mit, dass sie die Nachricht MESSAGE der Mobilstation MS empfangen haben, bzw. leiten die drei Antennen ANT-B, ANT-C und ANT-D die Nachricht MESSAGE der Mobilstation MS an die Steuereinrichtung APS1 weiter. Die Benachrichtigung der Steuereinrichtung APS1 durch die Antenne ANT-D kann über die mit der Antenne ANT-D verbundene Steuereinrichtung APS2 erfolgen. Alternativ ist es auch möglich, dass die beiden Antennen ANT-B und ANT-C die ihnen zugewiesene Steuereinrichtung APS1, und die Antenne ANT-D die ihr zugewiesene Steuereinrichtung APS2 informiert, wonach die beiden Steuereinrichtungen APS1 und APS2 Informationen über den Empfang der Nachricht MESSAGE in ihren Funkzellen bzw. die Nachricht MESSAGE an eine gemeinsame netzseitige Einrichtung weiterleiten, welche ihnen dann die an die Mobilstation MS zu versendende Nachricht DATA übermittelt. Die Versendung der Nachricht DATA an die Mobilstation MS erfolgt im Anschluss über die drei Antennen ANT-B, ANT-C und ANT-D.

Eine weitere Vorgehensweise ist in Figur 3 dargestellt. Während in Figur 2 die Mobilstation MS die Nachricht MESSAGE, aus deren Empfang hergeleitet wird, über welche Antennen im folgenden Nachrichten an die Mobilstation MS zu versenden sind, unaufgefordert versendet, erfolgt zu Beginn des in Figur 3 dargestellten Verfahrensablaufs die Versendung einer Nachricht ADR (ADR: Antenna Detection Request) an die Mobilstation MS, mittels welcher die Mobilstation MS unter Nennung ihrer Identifikationsinformationen aufgefordert wird, eine Signalisierungsnachricht mit ihren Identifikationsinformationen zu versenden. Die Nachricht ADR wird über die drei Antennen ANT-A, ANT-B und ANT-C an die Mobilstation MS gesendet. Hierbei wird davon ausgegangen, dass netzseitig bekannt ist, dass sich die Mobilstation MS in der Funkzelle FZ1 oder zumindest in der näheren Umgebung der Funkzelle FZ1 aufhält. Es ist jedoch auch möglich, die Nachricht ADR über die Antennen einer Mehrzahl von Funkzellen oder über alle Antennen des Funkkommunikationssystems auszustrahlen.

In Reaktion auf den Empfang der Nachricht ADR sendet die Mobilstation MS die ihre Identifikationsinformationen umfassende Nachricht ADD (ADD: Antenna Detection Done), welche von den Antennen ANT-B und ANT-C empfangen wird. Die Antennen ANT-B und ANT-C informieren die Steuereinrichtung APS1 mit der Nachricht INFORM darüber, dass sie eine Nachricht ADR von der Mobilstation MS empfangen haben, bzw. leiten die Nachricht ADR von der Mobilstation MS an die Steuereinrichtung APS1 weiter. Im Anschluss wird die Nachricht DATA über die Antennen ANT-B und ANT-C, welche die Nachricht ADR von der Mobilstation MS empfangen haben, an die Mobilstation MS gesendet.

Die Versendung der Nachricht ADR kann in regelmäßigen Zeitabständen erfolgen. Vorteilhafter ist es jedoch, dass eine Nachrichte ADR immer dann ausgestrahlt wird, wenn netzseitig eine Nachricht an die Mobilstation MS vorliegt. Es ist auch möglich, bei Vorliegen einer Nachricht an die Mobilstation MS zu überprüfen, wann die letzte Nachricht ADR gesendet wurde, und eine neue Nachricht ADR nur dann zu senden, wenn seit der letzten Versendung eine bestimmte Zeitspanne vergangen ist.

Die Nachrichten ADR können mit einer Identifikationsinformation derjenigen Funkzelle ausgestattet sein, in welcher sie versendet werden. Wird eine Nachricht ADR in mehreren Funkzellen ausgestrahlt, so wird in jeder Funkzelle die der jeweiligen Funkzelle entsprechende Identifikationsinformation in die Nachricht ADR eingefügt. Versendet die Mobilstation MS dann eine Antwort ADD auf die Nachricht ADR hin, fügt sie der Antwort ADD die Identifikationsinformationen derjenigen Funkzellen bei, über deren Antennen sie die Nachricht ADR empfangen hat. Dies ist insbesondere dann vorteilhaft, wenn die Mobilstation MS die Nachricht ADR von Antennen verschiedener Funkzellen empfängt. In diesem Fall ist der Steuereinrichtung einer Funkzelle durch die Auswertung der Nachricht ADD bekannt, dass eine Mobilstation auch Antennen anderer Funkzellen empfangen kann, ohne dass diese Tatsache der jeweiligen Steuereinrichtung von einer anderen Steuereinrichtung oder einer anderen netzseitigen Einrichtung mitgeteilt werden muss.

Alternativ oder ergänzend zur Versendung der Nachrichten ADR mit dem Ziel, die für eine Nachrichtenversendung an die Mobilstation MS zu verwendenden Antennen zu bestimmen, kann auch das im folgenden beschriebene, im rechten Teil der Figur 3 dargestellte Verfahren angewandt werden. Nach dem Empfang einer Nachricht DATA bestätigt die Mobilstation MS den Empfang der Nachricht DATA durch die Versendung einer Nachricht ACK, welche Identifikationsinformation der Mobilstation MS umfasst. Diejenigen netzseitigen Antennen, welche die Nachricht ACK empfangen haben, in Figur 3 die Antennen ANT-B, ANT-C und ANT-D, informieren wie oben beschrieben mit der Nachricht INFORM die Steuereinrichtung APS1 bzw. die Steuereinrichtungen APS1 und APS2 über den Empfang der Nachricht ACK von der Mobilstation MS, bzw. leiten die Nachricht ACK von der Mobilstation MS an die jeweilige Steuereinrichtung APS1 bzw. APS2 weiter. Daraufhin werden für die nächste Nachrichtenversendung an die Mobilstation MS die drei Antennen ANT-B, ANT-C und ANT-D verwendet. Dadurch, dass Bestätigungsnachrichten ACK der Mobilstation MS zur Bestimmung der zukünftigen netzseitigen Sendeantennen eingesetzt werden, entsteht kein zusätzlicher Signalisierungsoverhead, da die Bestätigungsnachrichten ACK unabhängig von dem erfindungsgemäßen Verfahren in der Regel ohnehin versendet werden. Weiterhin ermöglicht es die beschriebene Verwendung der Bestätigungsnachrichten ACK, die optimalen Antennen nach jeder Versendung einer von der Mobilstation MS bestätigten Nachricht zu bestimmen. Dies resultiert bei einer häufigen Versendung von Nachrichten an die Mobilstation MS zu einer kontinuierlichen Anwendung des Verfahrens.

Figur 4 zeigt schematisch den Aufbau der Steuereinrichtung APS1. Über die Mittel RECEIVE empfängt die Steuereinrichtung APS1 die Nachrichten INFORM bzw. die von netzseitigen Antennen empfangenen Nachrichten von netzseitigen Antennen. Nach der Auswertung der Nachrichten INFORM in den Mitteln DECIDE bestimmt die Steuereinrichtung APS1, über welche Antennen im folgenden eine Nachrichtenversendung an eine Mobilstation erfolgen soll. Über die Mittel INSTRUCT wird den entsprechenden, mit den Mitteln DECIDE bestimmten Antennen mitgeteilt, dass sie eine Nachricht an die jeweilige Mobilstation versenden sollen. Entsprechend ist auch eine netzseitige Einrichtung für den Fall aufgebaut, dass an eine Mobilstation eine Nachricht über Antennen von verschiedenen Funkzellen versendet werden soll. Die Mittel RECEIVE empfangen die Nachrichten INFORM bzw. die in den verschiedenen Funkzellen empfangenen Nachrichten dann nicht direkt von den netzseitigen Antennen, sondern über die den jeweiligen Antennen zugewiesenen Steuereinrichtungen. Auf analoge Weise kommunizieren die Mittel INSTRUCT nicht direkt mit den netzseitigen Antennen, sondern mit den den jeweiligen Antennen zugewiesenen Steuereinrichtungen.

## Patentansprüche

1. Verfahren zur Kommunikation in einem Funkkommunikationssystem, umfassend netzseitige Einrichtungen (APS1, APS2, ANT-A, ANT-B, ANT-C, ANT-E, ANT-E) und Funkstationen (MS), bei dem
von netzseitigen Antennen (ANT-A, ANT-B, ANT-C, ANT-E, ANT-E) eine Nachricht (MESSAGE; ADD, ACK) einer Funkstation (MS) empfangen wird,
im Anschluss eine Nutzdatennachricht (DATA) über eine Mehrzahl von netzseitigen Antennen (ANT-A, ANT-B, ANT-C, ANT-E, ANT-E) zu der Funkstation (MS) übertragen wird,
**dadurch gekennzeichnet,**
**dass** die Zugehörigkeit von netzseitigen Antennen (ANT-A, ANT-B, ANT-C, ANT-E, ANT-E) zu der Mehrzahl von netzseitigen Antennen (ANT-A, ANT-B, ANT-C, ANT-E, ANT-E) davon abhängt, welche netzseitigen Antennen (ANT-A, ANT-B, ANT-C, ANT-E, ANT-E) die Nachricht (MESSAGE; ADD, ACK) der Funkstation (MS) empfangen haben.

2. Verfahren nach Anspruch 1,
**dadurch gekennzeichnet,**
**dass** es sich bei der netzseitig empfangenen Nachricht (MESSAGE; ADD, ACK) um eine Signalisierungsnachricht (MESSAGE) handelt, welche von der Funkstation (MS) in regelmäßigen Zeitabständen (T-MS) gesendet wird.

3. Verfahren nach Anspruch 1,
**dadurch gekennzeichnet,**
**dass** eine erste Nachricht (ADR, DATA) über mindestens eine netzseitige Antenne (ANT-A, ANT-B, ANT-C, ANT-E, ANT-E) zu der Funkstation (MS) übertragen wird, und
**dass** es sich bei der netzseitig empfangenen Nachricht (MESSAGE; ADD, ACK) um eine auf den Empfang der ersten Nachricht (ADR, DATA) hin gesendete Antwortnachricht (ADD, ACK) handelt.

4. Verfahren nach Anspruch 3,
**dadurch gekennzeichnet,**
**dass** es sich bei der ersten Nachricht (ADR, DATA) um eine Signalisierungsnachricht (ADR) handelt, welche die Funkstation (MS) auffordert, die Antwortnachricht (ADD) zu senden.

5. Verfahren nach Anspruch 3 oder 4,
**dadurch gekennzeichnet,**
**dass** die erste Nachricht (ADR, DATA) in regelmäßigen ersten Zeitabständen gesendet wird.

6. Verfahren nach einem der Ansprüche 3 bis 5,
**dadurch gekennzeichnet,**
**dass** die erste Nachricht (ADR, DATA) vor der Versendung der Nutzdatennachricht (DATA) an die Funkstation (MS) gesendet wird, unter der Bedingung, dass seit der letzten Versendung einer Nachricht des gleichen Typs wie die erste Nachricht (ADR, DATA) ein bestimmter zweiter Zeitabstand verstrichen ist.

7. Verfahren nach einem der Ansprüche 3 bis 6,
**dadurch gekennzeichnet,**
**dass** es sich bei der ersten Nachricht (ADR, DATA) um eine Nachricht mit Nutzdaten (DATA) und bei der Antwortnachricht (ADD, ACK) um eine Bestätigung (ACK) des Empfangs der Nutzdaten (DATA) durch die Funkstation (MS) handelt.

8. Verfahren nach einem der Ansprüche 3 bis 7,
**dadurch gekennzeichnet,**
**dass** die erste Nachricht (ADR, DATA) über alle netzseitigen Antennen (ANT-A, ANT-B, ANT-C, ANT-E, ANT-E) einer oder mehrerer Funkzellen (FZ1, FZ2) des Funkkommunikationssystems oder über alle netzseitigen Antennen (ANT-A, ANT-B, ANT-C, ANT-E, ANT-E) des Funkkommunikationssystems gesendet wird.

9. Verfahren nach einem der Ansprüche 3 bis 8,
**dadurch gekennzeichnet,**
**dass** die Mehrzahl von netzseitigen Antennen (ANT-A, ANT-B, ANT-C, ANT-E, ANT-E) der selben Funkzelle (FZ1, FZ2) des Funkkommunikationssystems angehört, oder
**dass** zumindest manche der netzseitigen Antennen (ANT-A, ANT-B, ANT-C, ANT-E, ANT-E) der Mehrzahl von netzseitigen Antennen (ANT-A, ANT-B, ANT-C, ANT-E, ANT-E) verschiedenen Funkzellen (FZ1, FZ2) des Funkkommunikationssystems angehören.

10. Verfahren nach einem der Ansprüche 3 bis 9,
**dadurch gekennzeichnet,**
**dass** die erste Nachricht (ADR, DATA) Identifikationsinformationen der jeweiligen Funkzelle (FZ1, FZ2), über deren netzseitige Antenne (ANT-A, ANT-B, ANT-C, ANT-E, ANT-E) oder Antennen (ANT-A, ANT-B, ANT-C, ANT-E, ANT-E) sie gesendet wird, umfasst, und
**dass** die Antwortnachricht (ADD, ACK) Identifikationsinformationen derjenigen Funkzelle oder Funkzellen (FZ1, FZ2), von deren netzseitigen Antenne oder Antennen (ANT-A, ANT-B, ANT-C, ANT-E, ANT-E) die Funkstation (MS) die erste Nachricht (ADR, DATA) empfangen hat, umfasst.

11. Netzseitige Einrichtung (APS1) in einem Funkkommunikationssystem,
mit Mitteln (RECEIVE) zum Empfangen über netzseitige Antennen (ANT-A, ANT-B, ANT-C, ANT-E, ANT-E) einer Nachricht (MESSAGE; ADD, ACK) einer Funkstation (MS) oder zum Empfangen von Informationen über den Empfang einer über netzseitige Antennen (ANT-A, ANT-B, ANT-C, ANT-E, ANT-E) empfangenen Nachricht (MESSAGE; ADD, ACK) einer Funkstation (MS),
mit Mitteln (INSTRUCT) zum Anordnen, dass eine Nutzdatennachricht (DATA) über eine Mehrzahl von netzseitigen Antennen (ANT-A, ANT-B, ANT-C, ANT-E, ANT-E) an die Funkstation (MS) gesendet wird,
**dadurch gekennzeichnet,**
**dass** sie weiterhin Mittel (DECIDE) zum Bestimmen der Zugehörigkeit von netzseitigen Antennen (ANT-A, ANT-B, ANT-C, ANT-E, ANT-E) zu der Mehrzahl von netzseitigen Antennen (ANT-A, ANT-B, ANT-C, ANT-E, ANT-E) in Abhängigkeit davon, welche netzseitigen Antennen (ANT-A, ANT-B, ANT-C, ANT-E, ANT-E) die Nachricht (MESSAGE; ADD, ACK) der Funkstation (MS) empfangen haben, aufweist.

12. Computerprogrammprodukt für eine netzseitige Einrichtung (APS1) in einem Funkkommunikationssystem,
mit Mitteln zum Empfangen von Informationen über den Empfang einer über netzseitige Antennen (ANT-A, ANT-B, ANT-C, ANT-E, ANT-E) empfangenen Nachricht (MESSAGE; ADD, ACK) einer Funkstation (MS),
mit Mitteln zum Festlegen, dass eine Nutzdatennachricht (DATA) über eine Mehrzahl von netzseitigen Antennen (ANT-A, ANT-B, ANT-C, ANT-E, ANT-E) an die Funkstation (MS) gesendet wird,
**dadurch gekennzeichnet,**
**dass** weiterhin Mittel vorhanden sind zum Bestimmen der Zugehörigkeit von netzseitigen Antennen (ANT-A, ANT-B, ANT-C, ANT-E, ANT-E) zu der Mehrzahl von netzseitigen Antennen (ANT-A, ANT-B, ANT-C, ANT-E, ANT-E) in Abhängigkeit davon, welche netzseitigen Antennen (ANT-A, ANT-B, ANT-C, ANT-E, ANT-E) die Nachricht (MESSAGE; ADD, ACK) der Funkstation (MS) empfangen haben.
